# EUROPÄISCHE PATENTSCHRIFT

(11) **EP 1 921 216 B1**
(45) Veröffentlichungstag und Bekanntmachung des Hinweises auf die Patenterteilung: **18.05.2011**
(21) Anmeldenummer: 06405473.7
(22) Anmeldetag: 08.11.2006
(51) Int. Cl.: E03D 11/14, F16F 1/44, F16F 3/087

(54) **Schalldämmelement und sanitäre Vorrichtung mit einem solchen Schalldämmelement sowie Verfahren zum Montieren einer solchen sanitären Vorrichtung**
Sound absorption element, sanitary device with such an element and method of mounting the device
Elément insonorisant, dispositif sanitaire avec un tel élément et procédé de montage

(43) Veröffentlichungstag der Anmeldung: 14.05.2008
(73) Patentinhaber: Geberit International AG, 8645 Jona (CH)
(72) Erfinder: Müller, Samuel, 8630 Rüti (CH); Schmucki, Peter, 8733 Eschenbach (CH)
(74) Vertreter: Groner, Manfred

(56) Entgegenhaltungen:
- CH-A- 317 998
- DE-A- 4 345 049
- DE-A1- 2 937 624
- GB-A- 1 058 313

## Beschreibung

Die Erfindung betrifft eine sanitäre Vorrichtung nach dem Oberbegriff des Anspruchs 1, so wie sie aus der DE-A-29 37 624 bekannt ist.

Die DE-A-29 37 624 offenbart ein Zellenelement für Bade-, Wasch- und Toilettenräume. Das Zellenelement besitzt ein Blechrahmengestell, das elastische Pufferkörper zur Abstützung gegen Wand und Boden aufweist. Die Pufferkörper werden mittels übergreifenden Laschen Leisten und Winkeleisen auf Druck beansprucht.

Die DE-A-43 45 049 offenbart ein Sanitärinstallationssystem mit Befestigungselementen, das mit schalldämmendem Material umgeben ist, um Betriebs- und Betätigungsgeräusche weitergehend zu dämmen. Das schalldämmende Material weist Puffer aus Gummi auf, welches durch Winkelstücke belastet werden.

Die EP 0 337 415 B1 offenbart ein Schalldämmelement mit einem elastomeren Körper aus Polyurethan, das einen inneren Hohlraum des ersten tragenden Teils vollständig ausfüllt und einen Fussteil des zweiten tragenden Teils vollständig einbettet. Bei der Herstellung dieses Schalldämmelements müssen die beiden tragenden Teile zueinander ausgerichtet und der genannte elastomere Zwischenkörper in den Hohlraum des ersten tragenden Teils eingegossen werden.

Die GB-A-1,058,313 offenbart ein vibrationsdämpfendes Element zum Lagern eines Motors in einem Fahrzeug. Das Element weist ein Gehäuse auf, in dem zwischen zwei gummielastischen schichten eine Platte eines Befestigungsteils gelagert ist. Am Gehäuse sind Gewindebolzen zu Befestigen des Elements befestigt.

Die CH 317 998 offenbart eine Federungseinrichtung, die ein Gehäuse aufweist, in dem zwei gummielastische Schichten und zwischen diesen eine Platte mit einer Nabe angeordnet sind. Das Gehäuse wird mittels Schraubenbolzen am Chassis eines Fahrzeugs befestigt.

Der Erfindung liegt die Aufgabe zugrunde, eine sanitäre Vorrichtung der genannten Art zu schaffen, mit der wirksam eine Schallübertragung auf ein Gebäude vermindert werden kann und zudem eine stabile Befestigung bei gleichzeitig einfacher Montage ermöglicht. Die sanitäre Vorrichtung soll zudem einfach und kostengünstig herstellbar sein..

Die Aufgabe ist bei einem gattungsgemässen Schalldämmelement gemäss Anspruch 1 gelöst.

Bei der erfindungsgemässen sanitären Vorrichtung besteht der elastomere Körper des Schalldämmelements somit aus zwei Dämmschichten. Bei der Montage des Schalldämmelementes ist ein Ausrichten der beiden tragenden Teile zueinander sowie ein Giessvorgang nicht erforderlich. Da der zweite tragende Teil an einer Platte abgestützt ist, ist eine sichere Verankerung möglich und es können Horizontal-, Vertikal- und auch Querkräfte sicher in den elastomeren Körper eingeleitet werden.

Das Schalldämmelement ist zum Befestigen der sanitären Vorrichtungen an einem Gebäudeboden, einer Gebäudewand oder einer Gebäudedecke. Beim Montieren einer solchen sanitären Vorrichtung wird der erste tragende Teil eines solchen Schalldämmelementes auf einem Gebäudeboden, einer Gebäudewand oder einer Gebäudedecke befestigt und der zweite tragende Teil wird mit einem Verbindungselement an einem Traggestell befestigt, an dem die sanitäre Vorrichtung gelagert ist. Das Traggestell wird beispielsweise mit solchen Schalldämmelementen an einen Gebäudeboden und einer Gebäudewand befestigt. Damit kann sehr wirksam eine Schallübertragung von der sanitären Vorrichtung auf das Gebäude vermindert werden. Gleichzeitig ist eine stabile Befestigung der sanitären Vorrichtung bei gleichzeitig einfacher Montage möglich.

Nach einer Weiterbildung der Erfindung ist der zweite tragende Teil ein Befestigungsbolzen. Ein solcher Bolzen ermöglicht eine besonders einfache und universelle Befestigung des Schalldämmelementes an einem Verbindungsteil, beispielsweise an einem Befestigungswinkel. Möglich ist auch eine direkte Befestigung, beispielsweise an einer Profilstange.

Nach einer Weiterbildung der Erfindung ist das Befestigungsmittel des zweiten tragenden Teils ein Befestigungsgewinde. Der zweite tragende Teil kann dann beispielsweise mittels einer Mutter an einem Verbindungsteil oder einer Schiene befestigt werden.

Eine einfache und besonders sichere Verankerung des zweiten tragenden Teils an der genannten Platte ergibt sich dann, wenn gemäss einer Weiterbildung der Erfindung der zweite tragende Teil mit einem Ende in eine Öffnung der Platte eingreift und mit einem Kragen über dieser Öffnung auf der Platte aufliegt. Dies ermöglicht zudem auch eine sehr einfache Montage.

Nach einer Weiterbildung der Erfindung ist vorgesehen, dass zwischen dem schalldämmenden Körper und dem genannten Gehäuse wenigstens ein Zwischenraum vorgesehen ist, in den sich der schalldämmende Körper bei einer Belastung ausdehnen kann. Aufgrund eines solchen Zwischenraumes kann sich der schalldämmende Körper bei einer Belastung ausweiten und behält damit seine Elastizität länger als bei einem vollständig ausgefüllten Innenraum. Ein solcher Zwischenraum kann auch gebildet werden, indem die genannten Dämmschichten die Platte seitlich überragen.

Der schalldämmende Körper bildet gemäss einer Weiterbildung der Erfindung einen Quader. Dieser ist so ausgebildet, dass ein erster umlaufender Zwischenraum an einer ersten rechteckigen Kante und ein zweiter Zwischenraum an einer gegenüberliegenden rechteckigen Kante angeordnet sind. Der elastomere Körper kann dadurch bei einer Belastung in allen Richtungen ausweichen, so dass die Elastizität unabhängig von der Richtung der Krafteinleitung erhalten bleibt.

Eine besonders einfache und kostengünstige Herstellung des Schalldämmelementes ergibt sich dann, wenn gemäss einer Weiterbildung der Erfindung der erste tragende Teil aus einer Grundplatte besteht, auf welcher ein separat hergestelltes Gehäuse befestigt ist. Dieses Gehäuse kann beispielsweise aus einem Blech sehr einfach hergestellt und beispielsweise mit der Grundplatte verschraubt werden. Vor der Befestigung der Grundplatte am Gehäuse wird der elastomere Körper und der zweite tragende Teil eingesetzt.

Weitere vorteilhafte Merkmale ergeben sich aus den abhängigen Patentansprüchen, der nachfolgenden Beschreibung sowie der Zeichnung.

Ein Ausführungsbeispiel der Erfindung wird nachfolgend anhand der Zeichnung näher erläutert. Es zeigen:
- Figur 1: eine räumliche Ansicht eines erfindungsgemässen Schalldämmelementes,
- Figur 2: ein Schnitt durch das erfindungsgemässe Schalldämmelement,
- Figur 3: eine Ansicht des elastomeren Körpers und des an diesem verankerten zweiten tragenden Teils,
- Figur 4: ein Schnitt entlang der Linie IV-IV der Figur 3 und
- Figur 5: schematisch eine Ansicht einer WC-Anlage, die mit erfindungsgemässen Schalldämmelementen an einem Gebäudeboden und einer Gebäudewand befestigt ist.

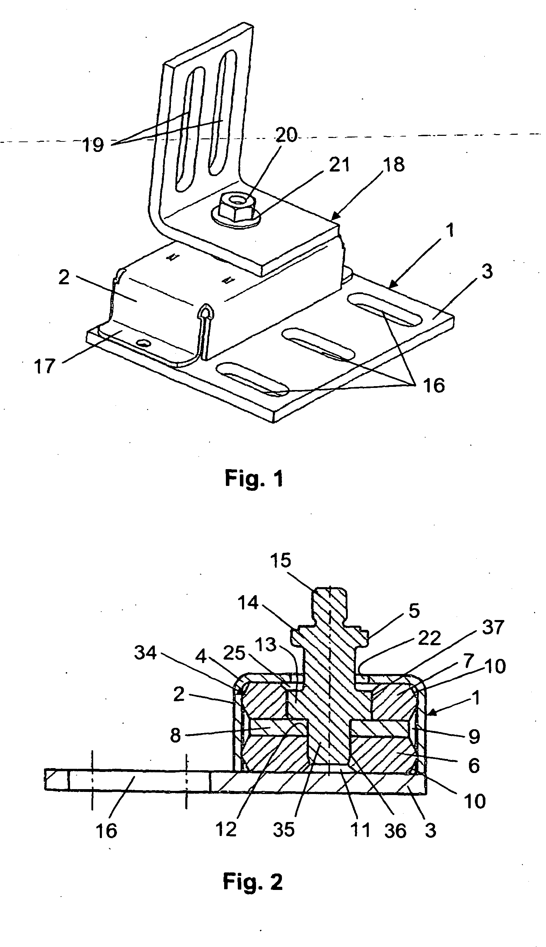

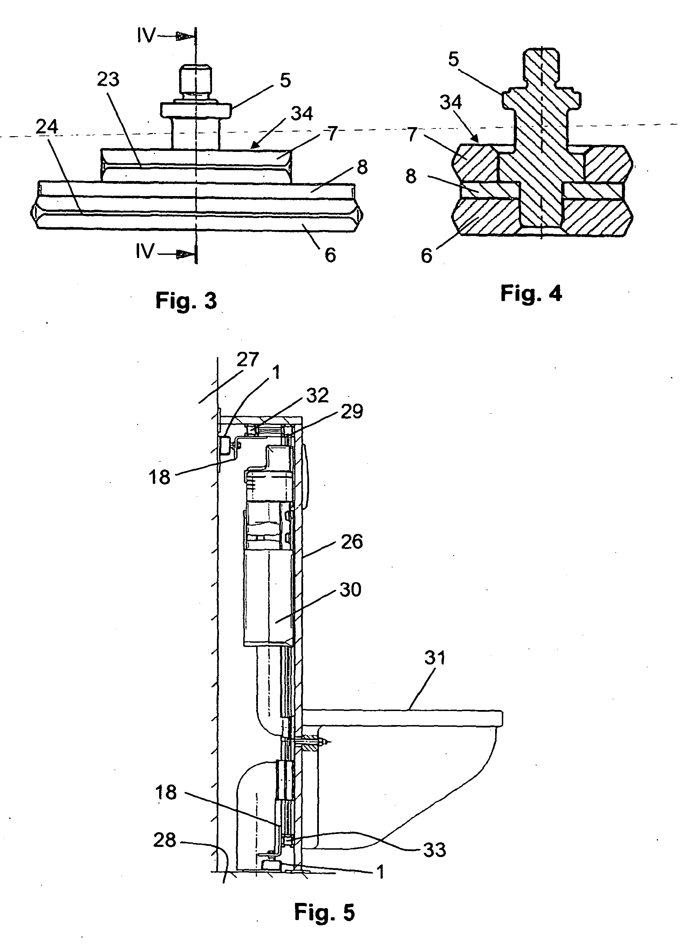

Das Schalldämmelement 1 besitzt gemäss den Figuren 1 und 2 eine vorzugsweise ebene und rechteckige Grundplatte 3, in die mehrere Langlöcher 16 eingearbeitet sind. Diese Langlöcher 16 dienen zum Befestigen des Schalldämmelementes 1 an einer Gebäudewand 27 oder einem Gebäudeboden 28, wie die Figur 5 zeigt. Das Schalldämmelement 1 kann aber auch an einem anderen Gegenstand, beispielsweise auch an einer Gebäudedecke befestigt werden. Die Befestigung erfolgt beispielsweise mit hier nicht gezeigten Bolzen. Die Grundplatte 3 besteht vorzugsweise aus einem geeigneten Metall und ist beispielsweise ein Stanzteil.

An der Grundplatte 3 ist ein Gehäuse 2 befestigt. Zur Befestigung des Gehäuses 2 weist das Gehäuse 2 gegenüberliegende Abbiegungen 17 auf. An diesen ist das Gehäuse 2 beispielsweise mit Nieten oder Schrauben mit der Grundplatte 3 verbunden. Das Gehäuse 2 kann beispielsweise aus einem gestanzten Blechteil hergestellt werden. Die Grundplatte 3 könnte mit dem Gehäuse 2 beispielsweise auch verrastet sein.

Das Gehäuse 2 bildet gemäss Figur 2 einen Hohlraum 25, in den ein schalldämmender Körper 34 eingesetzt ist. Der schalldämmende Körper 34 bildet beispielsweise ein Quader, der spielfrei in den Hohlraum 25 eingesetzt ist, diesen jedoch vorzugsweise nicht vollständig ausfüllt.

Der schalldämmende Körper 34 besteht aus einer ersten Dämmschicht 6, die an der Grundplatte 3 anliegt. Ein zweites Schalldämmelement 7 ist zwischen einer Platte 8 und einem Gehäuseoberteil 4 angeordnet. Der schalldämmende Körper 34 ist spielfrei im Hohlraum 25 gelagert, füllt diesen jedoch vorzugsweise nicht vollständig aus. Die Platte 8 ist vorzugsweise eine ebene Platte und so dimensioniert, dass zwischen ihr und dem Gehäuse 2 ein umlaufender Zwischenraum 9 besteht. Die Platte 8 ist somit nicht in Kontakt mit dem Gehäuse 2.

Die Platte 8 besitzt etwa mittig eine Bohrung 12, in die ein unteres zylindrisches Bolzenende 35 eines Befestigungsbolzens 5 spielfrei eingreift. Über diesem Bolzenende 35 besitzt der Befestigungsbolzen 5 einen umlaufenden Kragen 13, der an der Platte 8 aufliegt. Zur Aufnahme des Bolzenendes 35 und des Kragens 13 besitzen die Dämmschichten 6 und 7 korrespondierende Ausnehmungen 36 und 37. Zwischen dem unteren Bolzenende 35 und der Grundplatte 3 besteht ein Zwischenraum 11, so dass auch das untere Bolzenende 35 im Abstand zur Grundplatte 3 angeordnet ist. Ein weiterer Zwischenraum 25 befindet sich zwischen dem Kragen 13 und dem Gehäuseoberteil 4. Schliesslich bestehen Zwischenräume 10 an den Kanten der Schichten 6 und 7.

Die Grundplatte 3 bildet einen ersten tragenden Teil und der Bolzen 5 einen zweiten tragenden Teil. Die Längsschlitze 16 bilden Befestigungsmittel zum Befestigen der Grundplatte 3, beispielsweise an der Gebäudewand 27 oder am Gebäudeboden 28 wie in Figur 5 gezeigt. Der Bolzen 5 ragt durch eine Öffnung 22 des Gehäuses 2 hinaus. Er weist am herausragenden Ende als Befestigungsmittel vorzugsweise einen Gewindezapfen 15 auf, der über einem Flansch 14 angeordnet ist. Mit diesem Flansch 14 und dem Zapfen 15 kann der Bolzen 5 beispielsweise gemäss Figur 1 mit einer Unterlagscheibe 21 und einer Mutter 20 mit einem Befestigungswinkel 18 verbunden werden. Es sind hier aber auch andere Befestigungsmittel denkbar, mit denen der Befestigungswinkel 18 oder ein anderes Verbindungselement mit dem Bolzen 5 verbunden werden kann.

Der Befestigungswinkel 18 dient zum Verbinden des Schalldämmelementes 1 bzw. des Bolzens 5 mit einem Gegenstand, insbesondere einem Montagegestell 29 oder einem anderen geeigneten Gegenstand. Der Befestigungswinkel 18 besitzt hierzu Langlöcher 19, durch die hier nicht gezeigte Befestigungselemente, beispielsweise Befestigungsschrauben hindurchgesteckt sind. Der Befestigungswinkel 19 ist beispielsweise mit einer Profilstange 32 oder einer Profilstange 33 des Montagegestells 29 verbunden. Die Profilstange 33 ist im unteren Bereich angeordnet und verbindet das Gestell 29 mit dem Gebäudeboden 28, während die Profilstange 32 das Gestell 29 mit der Gebäudewand 27 verbindet. Das Schalldämmelement 1, das auf dem Gebäudeboden 28 angeordnet ist, nimmt hier insbesondere vertikale Kräfte auf, während das Schalldämmelement 1 an der Gebäudewand 27 vor allem horizontale Kräfte aufnimmt. In beiden Fällen können aber auch andere Kräfte und insbesondere Querkräfte und Zugkräfte vorhanden sein, die vom entsprechenden Schalldämmelement 1 aufgenommen werden. Diese Kräfte werden über die Platte 8 in die beiden Dämmschichten 6 und 7 eingeleitet. Übersteigen diese Kräfte ein bestimmtes Mass, so weichen die Dämmschichten 6 und 7 in die entsprechenden Zwischenräume 9, 10, 11 und 25 aus. Dadurch bleibt die Elastizität auch bei vergleichsweise hohen Kräften, beispielsweise bei Kräften bis 500 Kp erhalten. Dies hat zur Folge, dass bessere Schalldämmwerte erreicht werden können. Die Zwischenräume definieren auch eine klare Bewegungsbegrenzung im Überlastfall.

Damit der Körper 34 spielfrei im Gehäuse 2 gelagert ist, besitzen die Schichten 6 und 7 gemäss der Figur 3 jeweils einen umlaufenden Rand 23 bzw. 24, die an der Innenseite des Gehäuses 2 anliegen. Die erste Schalldämmschicht 6 überragt mit dem entsprechenden Rand 24 die Platte 8, wie die Figur 3 zeigt. Abgesehen von diesem Rand 24 ist die Platte 8 aber im Wesentlichen gleich dimensioniert wie die erste Dämmschicht 6. Bei einer vertikalen Belastung kann die vom Bolzen 5 auf die Platte 8 übertragene Kraft somit im Wesentlichen über die ganze Fläche der ersten Dämmschicht 6 übertragen werden. Die erste Dämmschicht 6 ist somit bei einer vertikalen Kraft im Wesentlichen über den ganzen Bereich gleichmässig belastet.

Das Schalldämmelement 1 dient beispielsweise für die Befestigung einer WC-Anlage 26 an der Gebäudewand 27 und dem Gebäudeboden 28. Die WC-Anlage 26 besitzt hier beispielsweise in bekannter Weise einen Spülkasten 30 und eine WC-Schüssel 31, die am Montagegestell 29 befestigt sind. Der Spülkasten 30 und die entsprechenden Anschlussteile können am Montagegestell 29 vormontiert sein. Bei der Montage werden die Schalldämmelemente 1 jeweils mit der Grundplatte 3 an der Gebäudewand 27 bzw. am Gebäudeboden 28 in der vorgesehenen Position befestigt. An den so positionierten Schalldämmelementen 1 wird nun das Montagegestell 29 angebracht, indem die Profilstangen 32 bzw. 33 mit den entsprechenden Befestigungswinkeln 18 verbunden, beispielsweise verschraubt werden. Das Montagegestell 29 ist damit schalldämmend und dennoch stabil befestigt. Es können nun die entsprechenden Leitungen angeschlossen und das Montagegestell 29 kann verkleidet werden. Schliesslich wird die WC-Schüssel 31 am Montagegestell 29 in bekannter Weise befestigt.

### Bezugszeichenliste

| | | | |
|---|---|---|---|
| 1 | Schalldämmelement | 20 | Mutter |
| 2 | Gehäuse | 21 | Unterlagscheibe |
| 3 | Grundplatte | 22 | Öffnung |
| 4 | Gehäuseoberteil | 23 | Rand |
| 5 | Befestigungsbolzen | 24 | Rand |
| 6 | erste Dämmschicht | 25 | Zwischenraum |
| 7 | zweite Dämmschicht | 26 | WC-Anlage |
| 8 | Platte | 27 | Gebäudewand |
| 9 | Zwischenraum | 28 | Gebäudeboden |
| 10 | Zwischenraum | 29 | Montagegestell |
| 11 | Zwischenraum | 30 | Spülkasten |
| 12 | Bohrung | 31 | WC-Schüssel |
| 13 | Kragen | 32 | Profilstange |
| 14 | Flansch | 33 | Profilstange |
| 15 | Zapfen | 34 | Körper |
| 16 | Langloch | 35 | Bolzenende |
| 17 | Abbug | 36 | Ausnehmung |
| 18 | Befestigungswinkel | 37 | Ausnehmung |
| 19 | Langloch | | |

## Patentansprüche

1. Sanitäre Vorrichtung mit wenigstens einem Schalldämmelement mit einem ersten tragenden Teil (3), der Befestigungsmittel (16) zu seiner Befestigung an einem Bauwerk (27, 28) aufweist, mit einem schalldämmenden Körper (34) aus elastomerem Material und mit einem zweiten tragenden Teil (5), der im schalldämmenden Körper (34) verankert ist und ebenfalls Befestigungsmittel (14, 15) zu seiner Befestigung an der sanitären Vorrichtung aufweist, **dadurch gekennzeichnet, dass** der schalldämmende Körper (34) in einem Gehäuse (2) angeordnet ist und wenigstens zwei Dämmschichten (6, 7) aufweist, zwischen denen eine Platte (8) gelagert ist, an welcher der zweite tragende Teil (5) abgestützt ist, dass der erste tragende Teil eine Grundplatte ist, auf welcher das separat hergestellte Gehäuse befestigt ist, wobei das wenigstens eine Schalldämmelement ein Verbindungselement der sanitären Vorrichtung zu dem Bauwerk (27, 28) bildet.

2. Sanitäre Vorrichtung nach Anspruch 1, **dadurch gekennzeichnet, dass** der zweite tragende Teil (5) ein Befestigungsbolzen (5) ist.

3. Sanitäre Vorrichtung nach Anspruch 1 oder 2, **dadurch gekennzeichnet, dass** der zweite tragende Teil (5) aus einer Öffnung (22) des ersten tragenden Teils (2, 3) herausragt.

4. Sanitäre Vorrichtung nach einem der Ansprüche 1 bis 3, **dadurch gekennzeichnet, dass** das Befestigungsmittel des zweiten tragenden Teils (5) ein Gewinde ist.

5. Sanitäre Vorrichtung nach einem der Ansprüche 1 bis 4, **dadurch gekennzeichnet, dass** der zweite tragende Teil (5) mit einem Bolzenende (35) in eine Öffnung (12) der Platte (8) eingreift und mit einem Kragen (13) über dieser Öffnung (12) auf der Platte (8) aufliegt.

6. Sanitäre Vorrichtung nach einem der Ansprüche 1 bis 5, **dadurch gekennzeichnet, dass** zwischen dem schalldämmenden Körper (34) und dem genannten Gehäuse (2) wenigstens ein Zwischenraum (9, 10, 11, 25) vorgesehen ist, in den sich der schalldämmende Körper (34) bei einer Belastung ausdehnen kann.

7. Sanitäre Vorrichtung nach einem der Ansprüche 1 bis 6, **dadurch gekennzeichnet, dass** die genannten Dämmschichten (6, 7) die Platte (8) seitlich überragen.

8. Sanitäre Vorrichtung nach Anspruch 6 oder 7, **dadurch gekennzeichnet, dass** der schalldämmende Körper (34) quaderförmig ausgebildet ist.

9. Sanitäre Vorrichtung nach einem der Ansprüche 6 bis 8, **dadurch gekennzeichnet, dass** wenigstens ein Zwischenraum (9) an einer umlaufenden Kante der genannten Platte (8) angeordnet ist.

10. Sanitäre Vorrichtung nach einem der Ansprüche 1 bis 9, **dadurch gekennzeichnet, dass** eine Dämmschicht (6) ein unteres Bolzenende (35) des zweiten tragenden Teils (5) überragt.

11. Sanitäre Vorrichtung nach Anspruch 1, **dadurch gekennzeichnet, dass** das Schalldämmelement (1) die sanitäre Vorrichtung (26) an einem Gebäudeboden (28) und/oder einer Gebäudewand (27) und/oder einer Gebäudedecke abstützt.

12. Sanitäre Vorrichtung nach Anspruch 11, **dadurch gekennzeichnet, dass** der zweite tragende Teil (5) mit einem Befestigungswinkel (18) verbunden ist und dass dieser Befestigungswinkel (18) mit einem Montagegestell (29) und insbesondere mit Profilstangen (32, 33) verbunden ist.

13. Sanitäre Vorrichtung nach einem der Ansprüche 1 bis 12, **dadurch gekennzeichnet, dass** sie eine WC-Anlage ist, und dass wenigstens zwei Schalldämmelemente (1) diese Anlage an einem Gebäudeboden (28) und wenigstens zwei Schalldämmelemente (1) an einer Gebäudewand (27) abstützen.

14. Verfahren zum Montieren einer sanitären Vorrichtung nach einem der Ansprüche 1 bis 13, **dadurch gekennzeichnet, dass** der erste tragende Teil (4) des wenigstens einen Schalldämmelements auf einem Gebäudeboden (28) einer Gebäudewand (27) oder einer Gebäudedecke befestigt wird und dass der zweite tragende Teil (5) mit einem Verbindungselement (18) an einem Traggestell bzw. einem Montagegestell (29) befestigt wird, an dem die sanitäre Vorrichtung (26) gelagert ist.

15. Verfahren nach Anspruch 14, **dadurch gekennzeichnet, dass** das Verbindungselement (18) ein Befestigungswinkel (18) ist.

16. Verfahren nach Anspruch 14 oder 15, **dadurch gekennzeichnet, dass** das Verbindungselement (18) an einer Profilstange (32, 33) befestigt ist.

## Claims

1. Sanitary arrangement with at least one sound-insulating element with a first load-bearing part (3), which has fastening means (16) for fastening it on a building structure (27, 28), with a sound-insulating body (34) made of elastomeric material, and with a second load-bearing part (5), which is anchored in the sound-insulating body (34) and likewise has fastening means (14, 15) for fastening it on the sanitary arrangement, **characterized in that** the sound-insulating body (34) is arranged in a housing (2) and has at least two insulating layers (6, 7), between which is mounted a plate (8) on which the second load-bearing part (5) is supported, and **in that** the first load-bearing part is a base plate, on which the separately produced housing is fastened, wherein the at least one sound-insulating element forms an element for connecting the sanitary arrangement to the building structure (27, 28).

2. Sanitary arrangement according to Claim 1, **characterized in that** the second load-bearing part (5) is a fastening bolt (5).

3. Sanitary arrangement according to Claim 1 or 2, **characterized in that** the second load-bearing part (5) projects out of an opening (22) in the first load-bearing part (2, 3).

4. Sanitary arrangement according to one of Claims 1 to 3, **characterized in that** the fastening means of the second load-bearing part (5) is a thread.

5. Sanitary arrangement according to one of Claims 1 to 4, **characterized in that** the second load-bearing part (5) has a bolt end (35) engaging in an opening (12) in the plate (8) and has a collar (13) resting on the plate (8) above this opening (12).

6. Sanitary arrangement according to one of Claims 1 to 5, **characterized by** the provision, between the sound-insulating body (34) and the aforementioned housing (2), of at least one interspace (9, 10, 11, 25), into which the sound-insulating body (34) can expand under loading.

7. Sanitary arrangement according to one of Claims 1 to 6, **characterized in that** the aforementioned insulating layers (6, 7) project laterally beyond the plate (8).

8. Sanitary arrangement according to Claim 6 or 7, **characterized in that** the sound-insulating body (34) is cuboidal.

9. Sanitary arrangement according to one of Claims 6 to 8, **characterized in that** at least one interspace (9) is arranged along an edge all the way round the aforementioned plate (8).

10. Sanitary arrangement according to one of Claims 1 to 9, **characterized in that** an insulating layer (6) projects beyond a lower bolt end (35) of the second load-bearing part (5).

11. Sanitary arrangement according to Claim 1, **characterized in that** the sound-insulating element (1) supports the sanitary arrangement (26) on a building floor (28) and/or a building wall (27) and/or a building ceiling.

12. Sanitary arrangement according to Claim 11, **characterized in that** the second load-bearing part (5) is connected to a fastening bracket (18), and **in that** this fastening bracket (18) is connected to an installation framework (29) and, in particular, to profile rods (32, 33).

13. Sanitary arrangement according to one of Claims 1 to 12, **characterized in that** it is a WC installation, and **in that** at least two sound-insulating elements (1) support this installation on a building floor (28) and at least two sound-insulating elements (1) support it on a building wall (27).

14. Method for installing a sanitary arrangement according to one of Claims 1 to 13, **characterized in that** the first load-bearing part (4) of the at least one sound-insulating element is fastened on a building floor (28), a building wall (27) or a building ceiling, and **in that** the second load-bearing part (5) has a connecting element (18) fastened on a load-bearing framework or an installation framework (29), on which the sanitary arrangement (26) is mounted.

15. Method according to Claim 14, **characterized in that** the connecting element (18) is a fastening bracket (18).

16. Method according to Claim 14 or 15, **characterized in that** the connecting element (18) is fastened on a profile rod (32, 33).

## Revendications

1. Dispositif sanitaire doté d'au moins un élément insonorisant avec une première partie porteuse (3) qui comporte des moyens de fixation (16) pour sa fixation à un châssis (27, 28), avec un corps insonorisant (34) en matière élastomère et avec une deuxième partie porteuse (5) ancrée dans le corps insonorisant (34) ainsi que des moyens de fixation (14, 15) pour sa fixation au dispositif sanitaire, **caractérisé en ce que** le corps insonorisant (34) est disposé dans un carter (2) et comporte au moins deux couches amortissantes (6, 7) entre lesquelles est placée une plaque (8), contre laquelle la deuxième partie porteuse (5) est appuyée, **en ce que** la première partie porteuse est une plaque de base sur laquelle le carter fabriqué séparément est fixé, l'au moins un élément insonorisant formant un élément de jonction du dispositif sanitaire avec le châssis (27, 28).

2. Dispositif sanitaire selon la revendication 1, **caractérisé en ce que** la deuxième partie porteuse (5) est un boulon de fixation (5).

3. Dispositif sanitaire selon la revendication 1 ou 2, **caractérisé en ce que** la deuxième partie porteuse (5) ressort d'une ouverture (22) de la première partie porteuse (2, 3).

4. Dispositif sanitaire selon l'une quelconque des revendications 1 à 3, **caractérisé en ce que** le moyen de fixation de la deuxième partie porteuse (5) est un filetage.

5. Dispositif sanitaire selon l'une quelconque des revendications 1 à 4, **caractérisé en ce que** la deuxième partie porteuse (5) s'engrène avec une extrémité de boulon (35) dans une ouverture (12) de la plaque (8) et repose, avec un col (13), sur la plaque (8), au-dessus de cette ouverture (12).

6. Dispositif sanitaire selon l'une quelconque des revendications 1 à 5, **caractérisé en ce qu'**au moins un interstice (9, 10, 11, 25) est prévu entre le corps insonorisant (34) et ledit carter (2), dans lequel le corps insonorisant (34) peut se dilater en cas de sollicitation.

7. Dispositif sanitaire selon l'une quelconque des revendications 1 à 6, **caractérisé en ce que** lesdites couches amortissantes (6, 7) surplombent en côté la plaque (8).

8. Dispositif sanitaire selon la revendication 6 ou 7, **caractérisé en ce que** le corps insonorisant (34) est réalisé en forme de carré.

9. Dispositif sanitaire selon l'une quelconque des revendications 6 à 8, **caractérisé en ce qu'**au moins un interstice (9) est disposé au niveau d'un bord périphérique de ladite plaque (8).

10. Dispositif sanitaire selon l'une quelconque des revendications 1 à 9, **caractérisé en ce qu'**une couche amortissante (6) surplombe une extrémité de boulon (35) inférieure de la deuxième partie porteuse (5).

11. Dispositif sanitaire selon la revendication 1, **caractérisé en ce que** l'élément insonorisant (1) soutient le dispositif sanitaire (26) au niveau d'un plancher du bâtiment (28) et/ou d'une paroi du bâtiment (27) et/ou d'un plafond du bâtiment.

12. Dispositif sanitaire selon la revendication 11, **caractérisé en ce que** la deuxième partie porteuse (5) est reliée à une équerre de fixation (18) et **en ce que** cette équerre de fixation (18) est reliée à un châssis de montage (29) et notamment à des barres profilées (32, 33).

13. Dispositif sanitaire selon l'une quelconque des revendications 1 à 12, **caractérisé en ce qu'**il est une installation de WC et **en ce qu'**au moins deux éléments insonorisants (1) soutiennent cette installation au niveau d'un plancher du bâtiment (28) et **en ce qu'**au moins deux éléments insonorisants (1) la soutiennent au niveau d'une paroi du bâtiment (27).

14. Procédé de montage d'un dispositif sanitaire selon l'une quelconque des revendications 1 à 13, **caractérisé en ce que** la première partie porteuse (4) de l'au moins un élément insonorisant est fixée à un plancher du bâtiment (28), à une paroi du bâtiment (27) ou à un plafond du bâtiment et **en ce que** la deuxième partie porteuse (5) est fixée à un élément de jonction (18) au niveau d'un châssis de support ou d'un châssis de montage (29) au niveau duquel le dispositif sanitaire (26) est positionné.

15. Procédé selon la revendication 14, **caractérisé en ce que** l'élément de jonction (18) est une équerre de fixation (18).

16. Procédé selon la revendication 14 ou 15, **caractérisé en ce que** l'élément de jonction (18) est fixé à une barre profilée (32, 33).
